(19) Europäisches Patentamt
European Patent Office
Office européen des brevets

(11) **EP 2 398 205 A1**

(12) **EUROPEAN PATENT APPLICATION**

(43) Date of publication:
**21.12.2011 Bulletin 2011/51**

(51) Int Cl.:
***H04L 29/06*** *(2006.01)*

(21) Application number: **10166723.6**

(22) Date of filing: **21.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **CANON KABUSHIKI KAISHA Ohta-ku Tokyo 146-8501 (JP)**

(72) Inventors:
• **Le Houerou, Brice 35690, Acigné (FR)**
• **Closset, Arnaud 35510, Cesson-Sévigné (FR)**
• **Aoki, Norihito Ohta-ku Tokyo 146-8501 (JP)**

(74) Representative: **Hitching, Peter Matthew Canon Europe Ltd 3 The Square Stockley Park Uxbridge Middlesex UB11 1ET (GB)**

Remarks:
Amended claims in accordance with Rule 137(2) EPC.

(54) **Interfacing devices, adapted to communicate via a parallel interface with an intermediate interface having fewer lines**

(57) The present invention relates to a communication system comprising a first device 101 having an interface adapted to be connected via a parallel connection 100 to a corresponding interface of a second device 102, the first and second devices being adapted to communicate via said parallel connection using a first predetermined communication protocol involving feedback. The system further comprises an intermediate connection 200c having fewer lines than said parallel connection, and first 200a and second 200b adapters connected together via the intermediate connection and being adapted to communicate using a second predetermined communication protocol not involving feedback. The first and second adapters are co-operable so that, when the first and second devices communicate, the first and second adapters perform emulation of the interfaces of the first and second devices. Therefore, the communication appears to the first and second devices as if the first predetermined communication protocol is being used.

Figure 2

**Description**

## 1. FIELD OF THE INVENTION

The present invention relates to methods, system and devices for interfacing communication devices, a computer programs which cause a computer or processor to carry out the steps of the methods, and information storage means storing the computer programs.

The invention falls within the technical field of communication networks and is particularly applicable in the implementation of a communication link between a MAC layer and a PHY layer of a communication device of a communication network.

## 2. TECHNOLOGICAL BACKGROUND

Multi-GHz radio communication networks, as for instance 60 GHz radio communication networks, are well suited to transmission of data at multi-Gigabits per second over limited distances.

Such multi-GHz radio communications are subject to shadowing and fading phenomena, which means that a physical obstacle placed in the wireless data transmission path from a source device to a destination device generates interferences that impact the communications. This may result in unrecoverable errors in the signal received by the destination device. In order to overcome the effects of the shadowing and fading phenomena, the respective antenna of the source and destination devices may be placed at locations at which the risk of occurrence of the shadowing and fading phenomena is reduced (for instance, above a given height in a room in which users are supposed to move). Diversity may also be obtained by using a plurality of antennas to transmit and/or receive the signal and separate these antennas by a minimum predefined distance, thus ensuring different transmission conditions from the source device to the destination device.

In some multi-GHz (e.g. 60 GHz) radio communication devices, the RF (radio frequency) antennas are directly integrated on top of the RF chip which forms the PHY layer module.

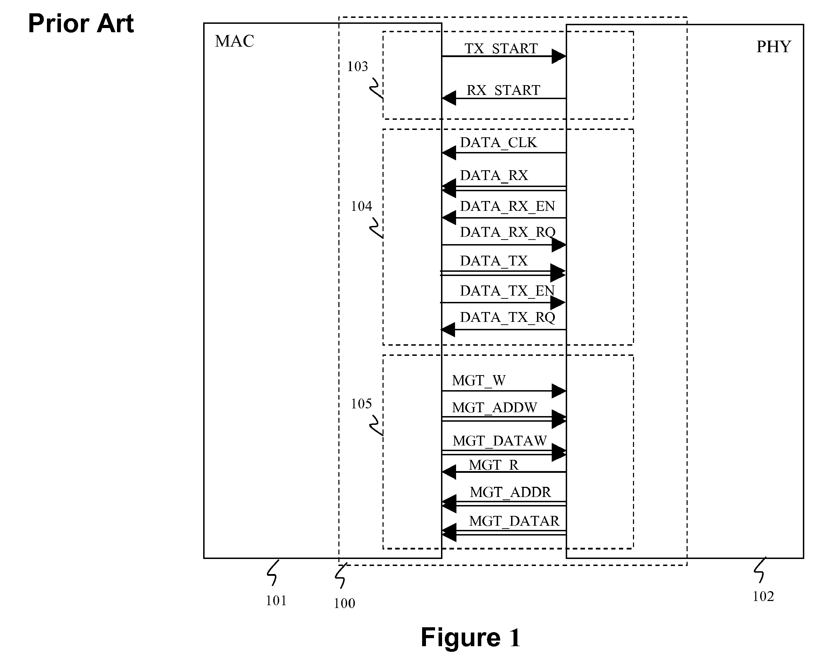

Radio communication standards, such as ECMA-369, specify a parallel connection between the MAC layer and the PHY layer, also referred to as MAC-PHY connection. Such a MAC-PHY connection is represented in **Figure 1.**

**Figure 1** represents a parallel connection 100 between a MAC layer 101 and a PHY layer 102, comprising three different sub-connections:

- a control data sub-connection 103;
- an application data sub-connection 104; and
- a management data sub-connection 105.

The control data sub-connection 103 is used by the MAC layer 101 to initiate a transmission of a MAC frame onto the network via the PHY layer 102. To initiate the transmission of the MAC frame, the MAC layer 101 uses the signal TX_START. The control data sub-connection 103 is also used by the PHY layer 102 to indicate a reception of a MAC frame from the network (via the PHY layer 102). To indicate the reception of the MAC frame, the PHY layer 102 uses the signal RX_START.

The management data sub-connection 105 is used by the MAC layer 101 and the PHY layer 102 to exchange information relative to the setting up of the communication, such as information regarding the MAC frame structure. The management data are a sub-class of control data, with dedicated interfaces and sub-connection.

The MAC layer 101 provides management data to the PHY layer 102 by activating the signal MGT_W (indicating that the signals MGT_ADDW and MGT_DATAW are valid), provides said management data via the signals MGT_DATAW and the concerned register address via the signals MGT_ADDW. The PHY layer 102, when the signal MGT_W is valid, obtains said management data via the signals MGT_DATAW and the register address, to which said management data shall be written, via the signals MGT_ADDW.

For instance, the management data sub-connection 105 allows the MAC layer 101 to define the structure of a following MAC frame. The MAC frame is constituted by a plurality of (maximum N) data segments, one register $DS_i$ (i=1 to N) being provided per such data segment according to its position in the MAC frame. Each register $DS_i$ may contain the respective data segment length $L_i$ and code rate $CR_i$ to be applied, as well as an identification of the coding scheme $CS_i$ to be applied.

The PHY layer 102 provides management data (such as triggering events, interruptions or exceptions) to the MAC layer 101 by activating the signal MGT_R (indicating that the signals MGT_ADDR and MGT_DATAR are valid), provides said management data via the signals MGT_DATAR and the concerned register address via the signals MGT_ADDR. The MAC layer 101, when the signal MGT_R is valid, obtains said management data via the signals MGT_DATAR and the register address, to which said management data shall be written, via the signals MGT_ADDR.

The application data sub-connection 104 is used to exchange the data payload of MAC frames. The application data sub-connection 104 uses handshaking, based on the signals DATA_TX_RQ and DATA_TX_EN for transmitting a MAC frame and on the signals DATA_RX_RQ and DATA_RX_EN for receiving a MAC frame.

The signal DATA_TX_RQ is a flow control signal indicating that the PHY layer 102 requests application data from the MAC layer 101. In response, the MAC layer 101 activates the signal DATA_TX_EN (indicating that the signals DATA_TX are valid) and provides application data via the signals DATA_TX. The PHY layer 102, when the signal DATA_TX_EN is valid, obtains said application data via the signals DATA_TX.

The signal DATA_RX_RQ is a flow control signal indicating that the MAC layer 101 requests application data from the PHY layer 102. In response, the PHY layer 102 activates the signal DATA_RX_EN (indicating that the signals DATA_RX are valid) and provides application data via the signals DATA_RX. The MAC layer 101, when the signal DATA_RX_EN is valid, obtains said application data via the signals DATA_RX.

The data exchanges, either to transmit a MAC frame or to receive a MAC frame, are scheduled according to a clock signal DATA_CLK provided by the PHY layer 102 to the MAC layer 101.

It can be understood, from the brief description above, that such a parallel connection uses a handshake-based communication protocol, i.e. a communication protocol involving feedback.

The number of pins required to implement such a MAC-PHY connection increases with the data rate to be supported. It therefore lacks flexibility to face the aforementioned shadowing and fading phenomena, as it requires either to place the whole communication devices in an appropriate location (for instance, above a given height, as already mentioned) or to implement a complex and costly long-distance parallel connection (due to the high number of pins to support).

The Serial Gigabit Media Independent Interface (SGMII) specification has been proposed in order to convey network data and information about port speed (selected from 10/100/1000 Mbps) between a 10/100/1000 Mbps PHY layer and an Ethernet MAC layer with a reduced number of signal pins than required for conventional MAC-PHY connections. SGMII uses two data signals and two clock signals to convey frame data and link rate information between the 10/100/1000 Mbps PHY layer and the Ethernet MAC layer.

Even though the SGMII specification simplifies the electrical layout by reducing the number of necessary pins, the specified interface does not provide a sufficiently low communication latency of the MAC-PHY connection to efficiently allow multi-Gigabits per second data rates. Indeed, the SGMII specification proposes a handshake-based communication protocol between the MAC layer and the PHY layer, as well as a negotiation about the data rate, at the setting up of the connection. However, according to some wireless standards, like IEEE 802.15.3c for instance, the data rate may change from frame to frame and also during a single frame. For example, the data rate may change up to 8 times during a single MAC frame. Handshaking is not compatible with the low latency requirement of multi-Gigabits per second communications in between distant communication devices.

A similar issue exists when the MAC layer and the PHY layer are on a single PCB (Printed Circuit Board). Indeed, the high number of pins required to implement the MAC-PHY interface implies high routing cost if the chips respectively embedding the MAC layer and the PHY layer have to be placed at specific locations, due to design constraints, on the board.

It is desirable to overcome these various drawbacks of the prior art.

In particular, even when the distance between the first and second devices increases, it is desirable to maintain low latency communications between a first device and a second device, wherein the first device has an interface adapted to be connected via a parallel connection to a corresponding interface of the second device, and wherein the first and second devices are adapted to communicate via said parallel connection using a first predetermined communication protocol involving feedback.

In particular, it is desirable to reduce the number of pins necessary to set up and perform such low latency communications between the first and second devices. It is also desirable to provide such a technique that is simple to implement and inexpensive.

It is moreover desirable to provide a communication technique supporting multi-Gigabits per second data rates. It is also desirable to allow increasing the distance between RF antennas and the processing part of communication devices. It is also desirable to propose a communication technique that is adapted to the data exchange between a MAC layer and a PHY layer.

## 3. SUMMARY OF THE INVENTION

According to a first aspect, in at least one embodiment, the invention relates to a communication system comprising a first device having an interface adapted to be connected via a parallel connection to a corresponding interface of a second device, the first and second devices being adapted to communicate via said parallel connection using a first predetermined communication protocol involving feedback. The system comprises an intermediate connection having fewer lines than said parallel connection. The system further comprises first and second adapters connected together via said intermediate connection and being adapted to communicate via said intermediate connection using a second predetermined communication protocol not involving feedback. The first adapter is connected to said interface of said first device and the second adapter is connected to said interface of said second device and the adapters are co-operable so that, when the first and second devices communicate, the first adapter emulates said interface of said second device and the second adapter emulates said interface of said first device and so that the communication appears to each device as if the first predetermined communication protocol is being used between said devices.

Thus, in at least one embodiment, the invention relies on the principle that each of the first and second adapters emulates one respective interface of the first and second device. While there is no feedback involved in the communication protocol on the intermediate connection, the communication appears to the first and second devices as if the communication protocol involving feedback is being used directly between them. Such an emulation of the interfaces of the first and second devices allows maintaining low latency communications between the first and second device, although the distance between the first and second devices is being increased.

To transmit data items from the first device to the second device, the first adapter may transmit a first request signal to the first device conforming to a second request signal that the second device transmits to the second adapter. Furthermore, the communications according to the second predetermined communication protocol are unidirectional.

Therefore, emulating the interface of the first device by the first adapter consists in requesting data to be transmitted by activating the first request signal as if such a request signal were activated by the second device and propagated up to the first device, whereas the communications on the intermediate connection are unidirectional.

The communication protocol involving feedback may use handshaking and the communication protocol involving no feedback not use any handshaking.

Handshaking necessitates feedback: handshaking is an automated process of negotiation that dynamically sets parameters of a communications channel between two entities before nominal communication over the channel begins. For instance, in order to transfer a given amount of data from a source device to a destination device, the source device generates a 'ready' (or 'start') signal, the destination device generates in response a 'data request' signal that in turns makes the source device effectively provide the requested data.

Preferably, the first and second devices are adapted to communicate via the parallel connection at frequencies of multi-gigabits per second.

Advantageously, the second device being adapted to communicate with at least one communication device via a transmission medium, the first adapter comprises a transmitting unit for transmitting, via the intermediate connection, application data items grouped according to data blocks encoded by the second device according to their respective channel coding scheme, said encoded data blocks being transmitted on said transmission medium.

Therefore, the application data are provided by groups simplifying their processing by the addressed device, e.g. generating the encoded data block from the standpoint of the second device.

Advantageously, the communications via the intermediate connection are scheduled by transmission cycles of respective duration that equals a duration of a transmission, by the second device, of one encoded data block on said transmission medium.

Therefore, it is ensured that when the second device requests (for instance by using handshaking) application data in order to further encode data blocks to be transmitted on the transmission medium, application data are always available. The transmission latency is thus maintained from the beginning to the end of the communication.

Advantageously, the transmitting unit is further adapted, for each such transmission cycle, to:

- transmit application data items corresponding to one data block to be encoded by the second device according to its respective channel coding scheme;
- transmit a quantity of control data items, if any, said quantity depending on the channel coding scheme to be used by the second device to generate said one data block to be encoded.

Therefore, the buffering resources necessary at the first and second adapters to maintain low latency communications between the first and second devices are minimized.

Preferably, the first device has a Medium Access Control layer function and the second device has a Physical layer function.

Preferably, the Medium Access Control layer and the Physical layer functions are adapted to wireless communications.

In at least one embodiment, the first adapter and the first device are implemented in a first integrated circuit device and the second adapter and the second device are implemented in a second integrated circuit device.

Therefore, the first device and the second device can be easily and flexibly placed at various locations of the PCB, in a cost effective manner.

According to a second aspect, in at least one embodiment, the invention relates to an adapter, for use in a communication system that comprises first and second devices and a further adapter, the first device having an interface adapted to be connected via a parallel connection to a corresponding interface of the second device. The first device is adapted to communicate via said parallel connection with the second device using a first predetermined communication protocol involving feedback. Said adapter comprises:

- means for connecting said adapter to said further adapter via an intermediate connection having fewer lines than said parallel connection;

and said adapter further comprises:

- means for communicating with said further adapter via said intermediate connection using a second predetermined communication protocol not involving feedback,
- means for connecting said adapter to said interface of one of said first and second devices and for co-operating with the further adapter, when the further adapter is connected to said interface of the other of said first and second devices, so that, when the first and second devices communicate, said adapter emulates said interface of said other device and so that, when the further adapter emulates said interface of said one device, the communication appears to each device as if the first predetermined communication protocol is being used between said devices.

To transmit data items from said one device to said other device, the first adapter may comprise a transmitting unit for transmitting a first request signal to said one device, the first request signal conforming to a second request signal that said other device transmits to said further adapter. Furthermore, the communications according to the second predetermined communication protocol are unidirectional.

Preferably, the first device has a Medium Access Control layer function and the second device has a Physical layer function.

According to a third aspect, in at least one embodiment, the invention relates to an integrated circuit device comprising the aforementioned first device and said adapter. Similarly, the invention relates to an integrated circuit device comprising the aforementioned second device and said further adapter.

According to a fourth aspect, in at least one embodiment, the invention relates to a method of communication between first and second devices, the first device having an interface adapted to be connected via a parallel connection to a corresponding interface of the second device, and the first and second devices being adapted to communicate via said parallel connection using a first predetermined communication protocol involving feedback. The method is such that:

- first and second adapters, which are connected together via an intermediate connection having fewer lines than said parallel connection, communicate via said intermediate connection using a second predetermined communication protocol not involving feedback, the first adapter being connected to said interface of said first device and the second adapter being connected to said interface of said second device, and
  the adapters co-operate so that, when the first and second devices communicate, the first adapter emulates said interface of said second device and the second adapter emulates said interface of said first device and so that the communication appears to each device as if the first predetermined communication protocol is being used between said devices..

According to a fifth aspect, in at least one embodiment, the invention relates to a method for communication between first and second devices, the first device having an interface adapted to be connected via a parallel connection to a corresponding interface of the second device, and the first and second devices being adapted to communicate via said parallel connection using a first predetermined communication protocol involving feedback. In which method, one adapter, which is connected to said interface of one of said first and second devices and is also connected to a further adapter via an intermediate connection having fewer lines than said parallel connection, performs the steps of:

- communicating with said further adapter via said intermediate connection using a second predetermined communication protocol not involving feedback, said further adapter being connected to said interface of the other of said first and second devices, and
- co-operating with said further adapter so that, when the first and second devices communicate, said one adapter emulates said interface of said other device and so that, when said further adapter emulates said interface of said one device, the communication appears to each device as if the first predetermined communication protocol is being used between said devices.

According to a sixth aspect, in at least one embodiment, the invention relates to a computer program product that can be downloaded from a communication network and/or stored on a medium that can be read by a computer and/or run by a processor. This computer program product comprises instructions for implementing the aforementioned method (in any one of its various embodiments), when said program is run on a computer.

According to a seventh aspect, the present invention also proposes an information storage means, storing a computer program comprising a set of instructions that can be run by a computer to implement the aforementioned method (in any one of its various embodiments), when the stored information is read by the computer. In an embodiment, this information storage means is totally removable.

The benefits brought by this first adapter, by these communication methods, by this computer program product and by this information storage means are similar to those already mentioned in relation to the corresponding system.

## 4. BRIEF DESCRIPTION OF THE DRAWINGS

Other features and benefits of the invention will become more apparent from the following illustrative and non-limiting description, illustrated by the appended drawings, in which:

- Figure 1 diagrammatically illustrates a MAC-PHY connection, as known in the prior art;
- Figure 2 diagrammatically illustrates a MAC-PHY connection, according to an embodiment of the present invention;
- Figure 3 diagrammatically illustrates a transmitter module of a serial link adapter, adapted to transmit data from the MAC layer to the PHY layer in the MAC-PHY connection of Figure 2;
- Figure 4 diagrammatically illustrates a transmitter module of a serial link adapter, adapted to transmit data from the PHY layer to the MAC layer in the MAC-PHY connection of Figure 2;
- Figure 5 diagrammatically illustrates a receiver module of a serial link adapter, adapted to receive data, either from the MAC layer or from the PHY layer, in the MAC-PHY connection of Figure 2;
- Figure 6 represents a flow diagram of an algorithm performed by the serial link adapter, adapted to transmit data from the MAC layer to the PHY layer in the MAC-PHY connection of Figure 2;
- Figure 7 represents a flow diagram of an algorithm performed by the serial link adapter, adapted to transmit data from the PHY layer to the MAC layer in the MAC-PHY connection of Figure 2;
- Figure 8 diagrammatically illustrates data transmissions in a preferred embodiment of the MAC-PHY connection of Figure 2;
- Figure 9 represents a flow diagram of an algorithm performed by a serial link adapter, adapted to perform data transmissions in the particular embodiment of Figure 8.

## 5. DESCRIPTION OF THE PREFERRED EMBODIMENTS

The steps and means related to the invention are more fully described hereinafter in the context of an implementation of a MAC-PHY connection in a device adapted for 60 GHz wireless communications. However, the present invention is by no means limited to this implementation scenario. Indeed, the present invention applies to communication devices of other kind, such as devices for wireless communications operating at other frequencies, and even devices for wired communications.

Even though the detailed description above relates to data exchanges between a MAC layer and a PHY layer, the principles of the present invention similarly apply to data exchanges of communication modules of other kinds.

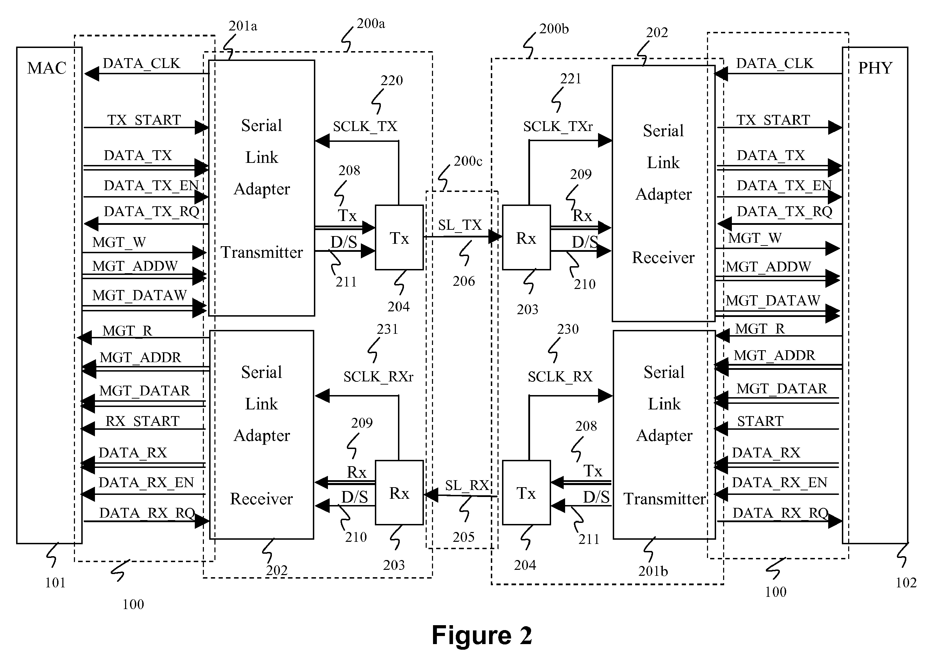

**Figure 2** diagrammatically illustrates a MAC-PHY connection, according to an embodiment of the present invention.

The MAC layer 101, the PHY layer 102 and their respective interfaces adapted to the parallel connection 100 are identical to those described above in relation to **Figure 1**.

The MAC layer 101 and the PHY layer 102 are however no more interconnected directly via the parallel connection 100. The MAC-PHY interconnection of Figure 2 further comprises first 200a and second 200b adapters connected together via an intermediate connection 200c. The first 200a and second 200b adapters are adapted to communicate via the intermediate connection 200c using a communication protocol not involving feedback.

The MAC layer 101 and the first adapter 200a may be implemented in a first integrated circuit device (chip) and the PHY layer 102 and the second adapter 200b may be implemented in a second integrated circuit device (chip).

The first 200a and second 200b adapters are serial link adapters in the embodiment of Figure 2. More generally, the present invention applies to any intermediate connection having fewer lines than the parallel connection 100 via which the MAC and PHY layers are adapted to directly communicate.

Referring back to Figure 2, the serial link adapter 200a is connected to the parallel interface of the MAC layer 101 and serial link adapter 200b is connected to the parallel interface of the PHY layer 102. The serial link adapters 200a and 200b are interconnected by an intermediate connection 200c comprising two lines, SL_TX 206 (to transmit data from the serial link adapter 200a to serial link adapter 200b) and SL_RX 207 (to transmit data from the serial link adapter 200b to serial link adapter 200a) and supporting a communication protocol not involving feedback.

Each serial link adapter 200a and 200b comprises respective transmitter 201a, 201b, and receiver 202 modules.

The transmitter module 201 a and the receiver module 202 of the serial link adapter 200a emulate the interface of the PHY layer 102 and are respectively co-operable with the receiver module 202 and the transmitter module 201a of the serial link adapter 200b so that the communication appears to the MAC layer 101 and the PHY layer 102 as if the communication protocol involving feedback, as defined for the parallel connection 100, is being directly used between said layers.

The transmitter module 201 b and the receiver module 202 of the serial link adapter 200b emulate the interface of the MAC layer 101 and are respectively co-operable with the receiver module 202 and the transmitter module 201 b of the serial link adapter 200a so that the communication appears to the PHY layer 102 and the MAC layer 101 as if the communication protocol involving feedback, as defined for the parallel connection 100, is being directly used between said layers.

The transmitter module 201 a of the serial link adapter 200a is connected to the line SL_TX 206 via a high speed serial transmitter 204. The high speed serial transmitter 204 of the serial link adapter 200a receives data from the transmitter module 201 a via signals Tx 208 and D/S 211, the signal D/S 211 indicating whether the data provided via the signals Tx 208 corresponds to payload characters or to signalling characters (also known as special characters). The high speed serial transmitter 204 of the serial link adapter 200a then encodes the data received from the transmitter module 201 a, for instance according to an 8b/10b coding scheme and serializes the encoded characters. The high speed serial transmitter 204 of the serial link adapter 200a then transmits the serialized characters to the line SL_TX 206 by using a high speed differential amplifier, of PECL (Positive Emitter Coupled Logic) type for instance. The high speed serial transmitter 204 of the serial link adapter 200a further provides a clock signal SCLK_TX 220 to the transmitter module 201 a of the serial link adapter 200a.

The transmitter module 201b of the serial link adapter 200b is similarly connected to the line SL_RX 205 and similarly receives a clock signal SCLK_RX 230.

The receiver module 202 of the serial link adapter 200b is connected to the line SL_TX 206 via a high speed serial receiver 203. The high speed serial receiver 203 of the serial link adapter 200b provides data to the receiver module 202 via signals Rx 209 and D/S 210, the signal D/S 210 indicating whether the data provided via the signals Rx 208 corresponds to payload characters or to signalling characters (also known as special characters). The high speed serial receiver 203 of the serial link adapter 200b receives signals from the line SL_TX 206 by using a high speed differential amplifier, of PECL type for instance. The high speed serial receiver 203 of the serial link adapter 200b then serial-parallel converts the signals received from the line SL_TX 206. The high speed serial receiver 203 of the serial link adapter 200b then decodes the converted data, for instance according to the 8b/10b coding scheme mentioned above. The high speed serial transmitter 204 of the serial link adapter 200a further provides a recovered clock signal SCLK_TXr 221 to the receiver module 202 of the serial link adapter 200b. The clock signal SCLK_TXr 221 is recovered from the signals received via the line SL_TX 206.

The receiver module 202 of the serial link adapter 200a is similarly connected to the line SL_TX 205 and similarly receives a clock signal SCLK_RXr 231.

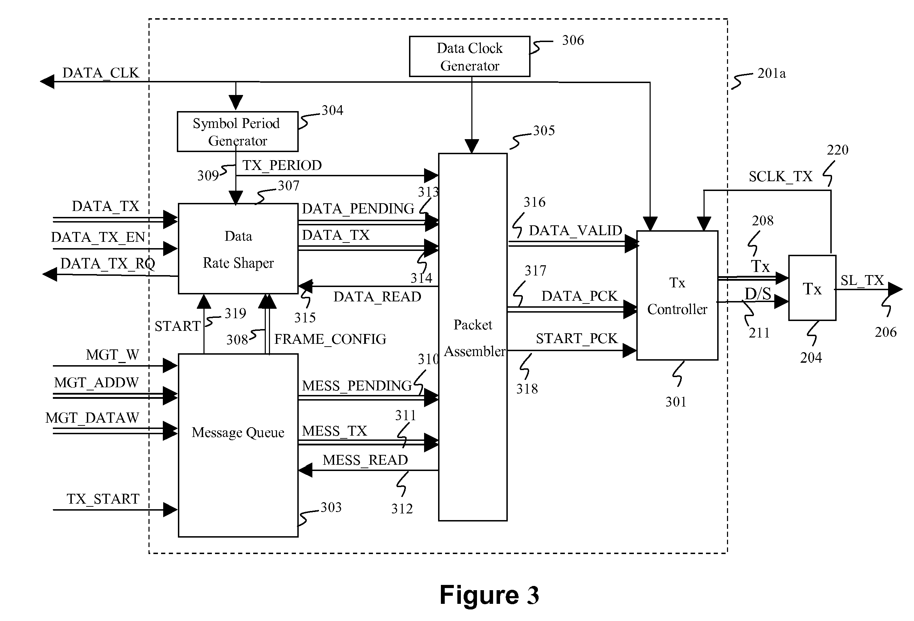

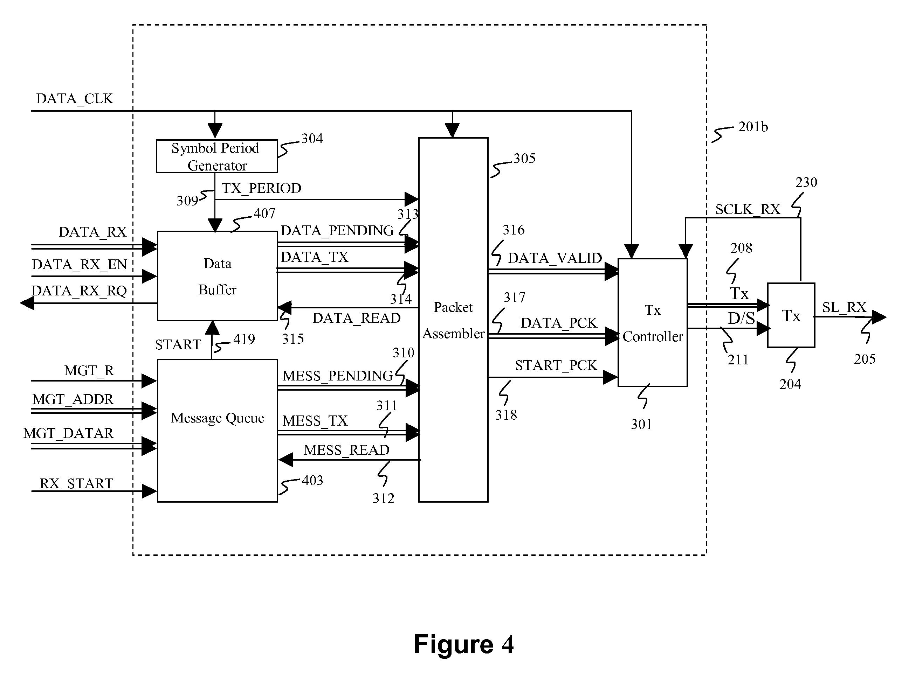

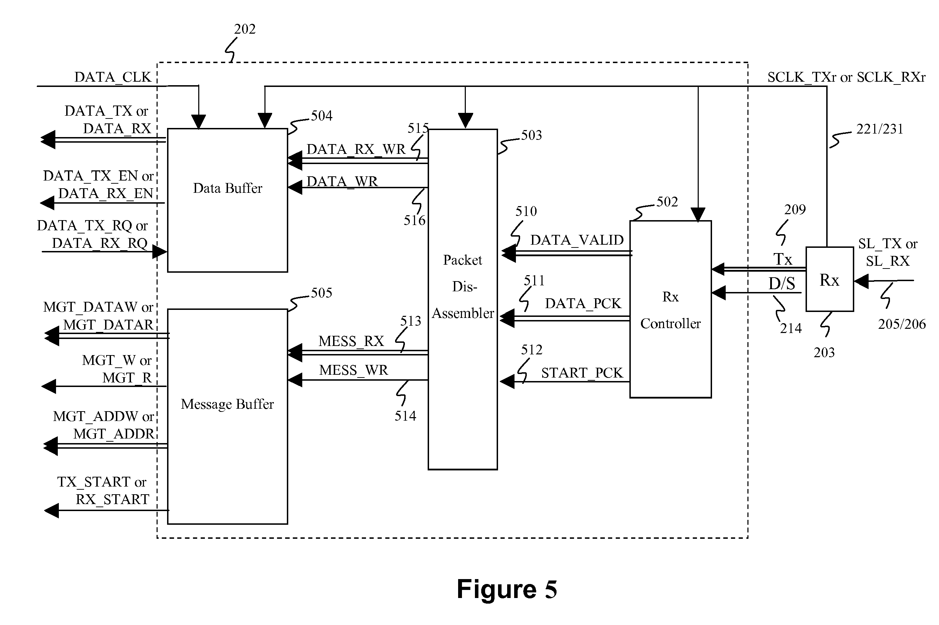

The transmitter module 201 a of the serial link adapter 200a is detailed hereafter in relation to Figure 3. The transmitter module 201 b of the serial link adapter 200b is detailed hereafter in relation to Figure 4. The receiver module 202 of the serial link adapters 200a and 200b is detailed hereafter in relation to Figure 5.

**Figure 3** diagrammatically illustrates an embodiment of the transmitter module 201 a of the serial link adapter 200a.

The transmitter module 201 a of the serial link adapter 200a comprises a data clock generator 306 reproducing, at MAC layer side, a data clock used at PHY layer side (and which is intended to be propagated via the signal DATA_CLK of the parallel connection 100). The frequency of the signal output by the data clock generator 306 is identical to frequency of the signal DATA_CLK provided by the PHY layer 102. These clock signals are however not synchronized.

The transmitter module 201 a of the serial link adapter 200a further comprises a symbol period generator 304 generating a periodic signal TX_PERIOD 309 having a period equalling the duration of a symbol transmitted by the PHY layer 102 in the wireless network. The signal TX_PERIOD 309 output by the symbol period generator 304 is used to schedule the transmissions of application data over the intermediate connection 200c, from the standpoint of the serial link adapter 200a.

The transmitter module 201 a of the serial link adapter 200a further comprises a message queue 303 transforming accesses performed by the MAC layer 101 to the control data sub-connection 104 and to the management data sub-connection 105 into messages. The signals MGT_W, MGT_ADDW, MGT_DATAW and TX_START of the parallel connection 100 are input to the message queue 303. The message queue 303 outputs a signal FRAME_CONFIG 308, representing control data corresponding to the structure of MAC frames to be transmitted by the PHY layer 102 in the wireless network. The message queue 303 also outputs a signal START 319, indicating that the signal TX_START has been activated by the MAC layer 101.

The message queue 303 outputs signals MESS_PENDING 310 and MESS_TX 311, and inputs a signal MESS_READ 312. The signal MESS_PENDING 310 is used to indicate the number of message pending in the message queue 303. The signal MESS_READ 312 is used to order a message transfer via the signal MESS_TX 311.

The transmitter module 201 a of the serial link adapter 200a further comprises a data rate shaper 307 determining, from control data provided by the MAC layer 101 via the management data sub-connection 105, a data rate to be applied to the intermediate connection 200c. The control data provided by the MAC layer 101 via the management data sub-connection 105 are provided by the message queue 303 to the data rate shaper 307 via the signal FRAME_CONFIG 308. The application data to be transmitted to the PHY layer 102 are provided by the MAC layer 101 by using the signal DATA_TX, DATA_TX_EN and DATA_TX_RQ of the parallel connection 100. The activation of the DATA_TX_RQ signal, to initiate the transfer of a MAC frame, is triggered by the activation of the signal START 319.

The data rate shaper 307 outputs signals DATA_PENDING 313 and DATA_TX 314, and inputs a signal DATA_READ 315. The signal DATA_PENDING 313 is used to indicate the number of application data pending in the data rate shaper 307. The signal DATA_READ 315 is used to order a transfer of application data via the signal DATA_TX 314.

The transmitter module 201 a of the serial link adapter 200a further comprises a transmitting controller 301 and a packet assembler 305. The transmitting controller 301 adapts the stream of packets output by the packet assembler 305 to the character format in input of the transmitter 204. The packet assembler 305 forms the data packets to be transmitted via the intermediate connection 200c. The packet assembler 201 a obtains application data from the data rate shaper 307, by activating the signal DATA_READ 315 and obtains control data from the message queue 303, by activating the signal MESS_READ 312.

The packet assembler 305 outputs signals START_PCK 318, DATA_PCK 317 and DATA_VALID 316. These signals are provided to the transmitting controller 301. The signal START_PCK 318 indicates a beginning of a new packet. The signal DATA_VALID 316 indicates, when activated, that data packets are provided via the signals DATA_PCK 317.

**Figure 4** diagrammatically illustrates an embodiment of the transmitter module 201 b of the serial link adapter 200b.

The transmitter module 201 b of the serial link adapter 200b uses the data clock signal DATA_CLK provided by the PHY layer 102.

The transmitter module 201 b of the serial link adapter 200b further comprises a symbol period generator 304 identical to the one with the same reference number in the transmitter module 201 a of the serial link adapter 200a. The signal TX_PERIOD 309 output by the symbol period generator 304 is used to schedule the transmissions of application data over the intermediate connection 200c, from the standpoint of the serial link adapter 200b.

The transmitter module 201 b of the serial link adapter 200b further comprises a message queue 403 transforming accesses performed by the PHY layer 102 to the control data sub-connection 104 and to the management data sub-connection 105 into messages. The signals MGT_R, MGT_ADDR, MGT_DATAR and RX_START of the parallel connection 100 are input to the message queue 403.

The message queue 403 outputs signals MESS_PENDING 310 and MESS_TX 311, and inputs a signal MESS_READ 312. These signals act similarly as the ones with the same reference numbers in the transmitter module 201 a of the serial link adapter 200a. The message queue 303 also outputs a signal START 419, indicating that the signal RX_START has been activated by the PHY layer 102.

The transmitter module 201 b of the serial link adapter 200b further comprises a transmitting controller 301 identical to the one with the same reference number in the transmitter module 201 a of the serial link adapter 200a.

The transmitter module 201 b of the serial link adapter 200b further comprises a packet assembler 305 identical to the one with the same reference number in the transmitter module 201 a of the serial link adapter 200a.

The transmitter module 201 b of the serial link adapter 200b further comprises a data buffer 407 storing all the application data received from the network via the PHY layer 102. The application data to be transmitted to the MAC layer 101 are provided by the PHY layer 102 by using the signals DATA_RX, DATA_RX_EN and DATA_RX_RQ of the parallel connection 100. The activation of the DATA_RX_RQ signal, to initiate the transfer of a MAC frame, is triggered by the activation of the signal START 419. The application data received from the PHY layer 102 are provided to the packet assembler 305 using signals DATA_PENDING 313, DATA_TX 314 and DATA_READ 315. These signals act similarly as the ones with the same reference numbers in the transmitter module 201 a of the serial link adapter 200a.

**Figure 5** diagrammatically illustrates an embodiment of the receiver module 202 of either the serial link adapter 200a or the serial link adapter 200b.

The receiver module 202 of the serial link adapter 200a and the receiver module 202 of the serial link adapter 200b are similar. Few differences exist however.

The receiver module 202 of the serial link adapter 200b uses the data clock signal DATA_CLK provided by the PHY layer 102 and the receiver module 202 of the serial link adapter 200a uses the data clock signal DATA_CLK provided by the data clock generator 304 of the transmitter module 201 a of the serial link adapter 200a.

In addition, the receiver module 202 of the serial link adapter 200a and the receiver module 202 of the serial link adapter 200b handle different signals of the parallel connection 100. Indeed, the receiver module 202 of the serial link adapter 200a handles the signals MGT_R, MGT_ADDR, MGT_ADDR, RX_START, DATA_RX, DATA_RX_EN and DATA_RX_RQ and the receiver module 202 of the serial link adapter 200b handles the signals MGT_W, MGT_ADDW, MGT_ADDW, TX_START, DATA_TX, DATA_TX_EN and DATA_TX_RQ.

The receiver module 202 further comprises a receiving controller 502 and a packet dis-assembler 503. The receiving controller 502 adapts the characters output by the receiver 203 into a stream of packets input to the packet dis-assembler 503. The receiver controller 502 outputs signals START_PCK 512, DATA_PCK 511 and DATA_VALID 510 that are used by the packet dis-assembler 503 in order to format messages and application data. The signal START_ PCK 512 indicates a beginning of a new packet. The signal DATA_VALID 510 indicates, when activated, that data packets are provided via the signals DATA_PCK 511.

The receiver module 202 further comprises a message buffer 505 connected to the management data sub-connection 105 and to the control data sub-connection 103 of the parallel connection 100. The message buffer 505 stores all the messages received from the packet dis-assembler 503. The message buffer 505 receives messages from the packet dis-assembler 503 via the signals MESS_RX 513 and MESS_WR 514, the signal MESS_WR 513 indicating, when activated, that messages are provided via the MESS_RX signals 513. The message buffer 505 then generates accesses to the management interface or to the control interface, on the basis of the stored messages.

The receiver module 202 further comprises a data buffer 504 connected to the application data sub-connection 104 of the parallel connection 100. The data buffer 504 stores all the application data received from the packet dis-assembler 503. The data buffer 504 receives application data from the packet dis-assembler 503 via the signals DATA_ RX_WR 515 and DATA_WR 516, the signal DATA_WR 516 indicating, when activated, that application data are being provided via the DATA_RX_WR signals 515.

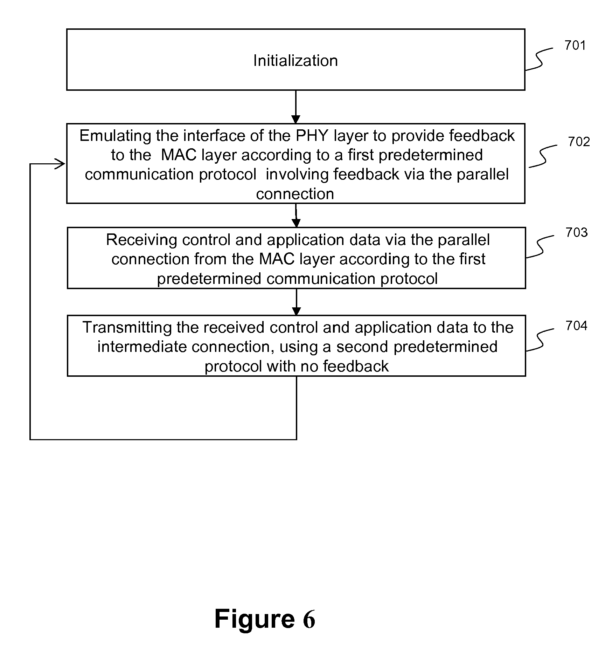

**Figure 6** represents a flow diagram of an algorithm performed by the serial link adapter 200a to interact with the MAC layer 101.

In a step 701, the serial link adapter 200a is initialized. All registers and memory zones in the serial link adapter 200a are cleared. Then the serial link adapter 200a is configured with settings depending on a wireless communication protocol that applies to the wireless network. These settings enable configuring the data clock generator 306 and the symbol period generator 304.

For example, the IEEE 802.15.3c AV standard requires a data sampling frequency of 2.538 GHz, each symbol period being constituted by 576 samples (512 samples issued from the Fast Fourrier Transform and 64 samples issued from the Cyclic Prefix), a modulation scheme of 16 QAM (Quadrature Amplitude Modulation with a constellation grid of 16 points) type with a code rate of 2/3. The total number of carriers is 512, but only 336 can be used for useful data transmission (the remaining being dedicated to pilots and nulls).

The processing frequency commonly used in serial link transceivers is 156.25 MHz. The processing frequency of the serial link adapter 200a shall be set to a frequency value of this order.

Therefore, the data clock generator 306 may be configured to output a clock signal having a frequency of 158.625 MHz (2.538 GHz /16). With this frequency, the symbol period generator 304 corresponds to a divider by 36 (2.538 GHz / 576 = 158.625 MHz / 36). For a word size of 32 bits, the amount of data encoded in one symbol is therefore 28 words:

$$336 \text{ (carriers)} \times 4 \text{ bits (16QAM)} \times 2/3 \text{ (code rate)} / 32 \text{ (word size)}$$

The data packet rate is then 158.625 MHz x 32 / 36 = 141 MHz, and shall be lower than the serial clock frequency in order to provide room for the serial link synchronization (also known as "training phase"). Generally speaking, a difference of approximately 5% between the data packet rate and the serial clock frequency is enough to obtain an operational serial link with clock recovery at receiving side. In the present example, the serial clock may be set to 156.25 MHz.

In a step 702, the serial link adapter 200a emulates the interface of the PHY layer 102 (adapted to communicate via the parallel connection 100) to provide feedback to the MAC layer 101 according to the already-mentioned communication protocol involving feedback, as defined for the parallel connection 100.

In order to emulate the interface of the PHY layer 102, the serial link adapter 200a reproduces the behaviour expected from the PHY layer 102 in the communication protocol involving feedback. For instance, when the MAC layer 101 activates the signal TX_START, the message queue 303 informs the data rate shaper 307 that the signal TX_ START has been activated, by activating the signal START 319. Then, the data rate shaper 307 of the serial link adapter 200a activates the signal DATA_TX_RQ in order to obtain the application data from the MAC layer 101 via the signals DATA_TX and DATA_TX_EN.

In addition to the control signal TX_START, the message queue 303 of the serial link adapter 200a accepts management data from the MAC layer 101 the signals via MGT_W, MGT_ADDW and MGT_DATAW. All these control and management data are processed by the message queue 303 in order to create corresponding messages. The management data concerning the MAC frame structure are also provided to the data rate shaper 307 in order to schedule the activation of the signal DATA_TX_RQ.

From the standpoint of the MAC layer 101, the serial link adapter 200a acts as if the MAC layer 101 were directly connected to the PHY layer 102 via the parallel connection 100. It should also be noticed that the emulation performed by the serial link adapter 200a doesn't involve any feedback from the PHY layer 102. Indeed, the serial link adapter 200a doesn't receive any signal from the PHY layer 102 to interact with the MAC layer 101.

Then, as a consequence of the emulation performed in the step 702, the serial link adapter 200a receives the application data from the MAC layer 101 in a step 703.

Then, in a step 704, the serial link adapter 200a transmits the control and application data received from the MAC layer 101 to the intermediate connection 200c, using to the already-mentioned communication protocol not involving feedback. The messages containing the control and management data received by the message queue 303 and the application data received by the rate shaper 307 are then assembled by the packet assembler 305 and transmitted to the serial link adapter 200b via the intermediate connection 200c by the transmitting controller 301.

Then, the algorithm is reiterated from the step 702.

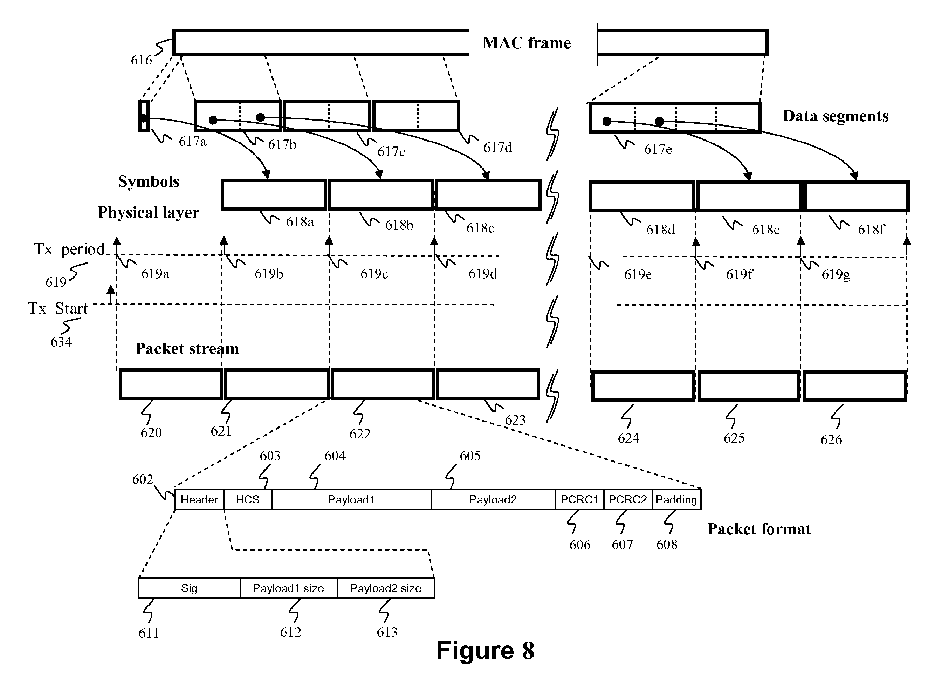

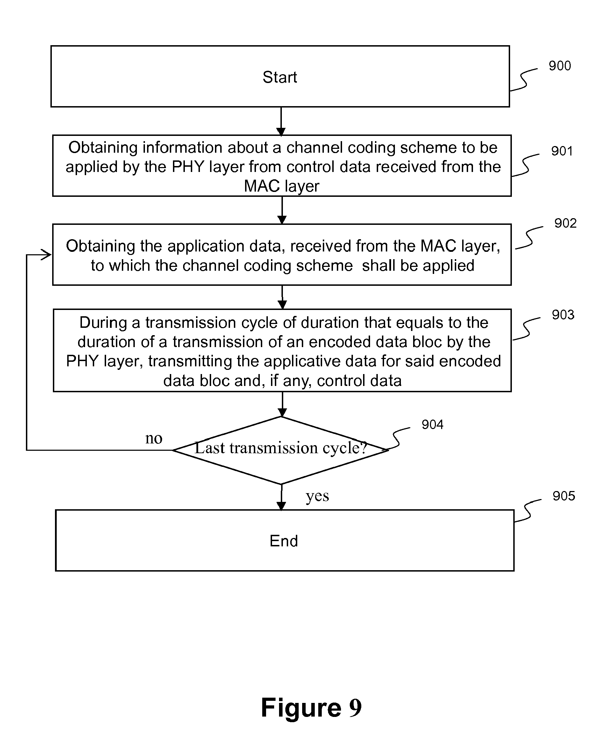

In a preferred embodiment, the transmission of the application data and control data is shaped and scheduled as detailed hereafter in relation with Figures 8 and 9.

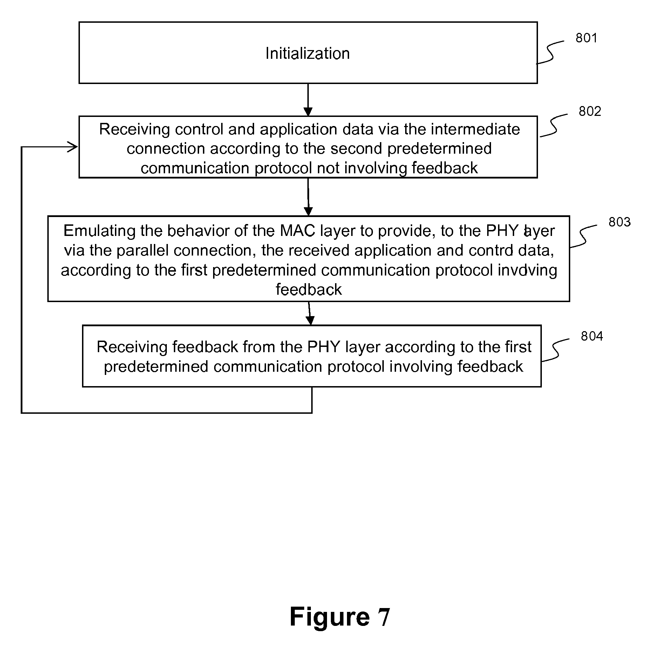

**Figure 7** represents a flow diagram of an algorithm performed by the serial link adapter 200b to interact with the PHY layer 102.

In a step 801, the serial link adapter 200b is initialized. All registers and memory zones in the serial link adapter 200b are cleared. Then the serial link adapter 200b is configured with settings depending on the wireless communication protocol that applies to the wireless network. These settings enable configuring the symbol period generator 304. Similarly as for the serial link adapter 200a, as described above in relation to Figure 6, the symbol period generator 304 may for instance be configured as a divider by 36.

In a step 802, the serial link adapter 200b receives, from the serial link adapter 200a via the intermediate connection 200c, control and application data according to the already-mentioned communication protocol not involving feedback.

In a step 803, the serial link adapter 200b emulates the interface of the MAC layer 101 (adapted to communicate via the parallel connection 100) to provide the application and control data to the PHY layer 102 according to the already-mentioned communication protocol involving feedback, as defined for the parallel connection 100. Therefore, the serial link adapter 200b manages the feedback provided from the PHY layer 102 via the parallel interface 100, but does not forward it to the serial link adapter 200a.

In order to emulate the interface of the MAC layer 101, the serial link adapter 200b reproduces the behaviour expected from the MAC layer 101 in the communication protocol involving feedback.

The packet dis-assembler 503 receives a stream of application and control data transmitted by the serial link adapter 200a via the intermediate connection 200c. The packet dis-assembler 503 then provides the messages containing the control data to the message buffer 505 and provides the application data to the data buffer 504. When a message representing a signal TX_START is processed by the message buffer 505, the TX_START signal is then activated by the message buffer 505. The PHY layer 102 is then expected to activate the DATA_TX_RQ signal. When the DATA_TX_RQ signal is activated, the data buffer 504 activates the DATA_TX_EN signal and provides the application data to the PHY layer 102 via the signals DATA_TX.

In the reverse transmission direction, when the PHY layer 102 activates the signal RX_START, the message queue 403 informs the data buffer 407 that the signal RX_START has been activated, by activating the signal START 419. Then, the data buffer 407 of the serial link adapter 200b activates the signal DATA_RX_RQ in order to obtain the application data from the PHY layer 102 via the signals DATA_TX and DATA_TX_EN.

The behaviour of the serial link adapter 200b is therefore close to the behaviour of the serial link adapter 200a already detailed for the other transmission direction.

From the description above, detailing the processing performed by the serial link adapters 200a and 200b, the one ordinary skilled in the art is able to implement the processing of said link adapters in both transmission directions.

Once the step 803 is performed, the algorithm is reiterated from the step 802.

**Figure 8** diagrammatically illustrates data transmissions performed by the communication system of Figure 2, in a preferred embodiment.

On top of Figure 8, a MAC frame 616 is shown. The MAC frame 616 is constituted of a plurality of data segments DSi 617a, 617b, 617c, 617d and 617e. The PHY layer 102 transmits on the medium of the wireless network symbols Sj (also known as encoded data blocks), obtained from the data segments DSi.

To obtain the symbols Sj, the PHY layer 102 applies to each data segment DSi its respective code rate CRi and coding scheme CSi.

All the symbols Sj have the same length and the duration of the transmission of any symbol Sj is equivalent. However, one data segment DSi can correspond to one symbol or a plurality of symbols Sj after encoding: the symbol 618a corresponds to the data segment 617a, the symbols 618b and 618c correspond to the data segment 617b, the symbols 618e, 618f and the two immediately subsequent symbols correspond to the data segment 617e.

The transmission of data on the intermediate connection 200c is scheduled (clock events 619a, 619b, 619c, 619d, 619e, 619f and 619g) on the basis of the duration of the transmission of one symbol by the PHY layer 102 on the medium of the wireless network. The serial link adapter 200a schedules the transmission of the application data to the intermediate connection 200c on the basis of the clock signal TX_PERIOD 309, and the period of the clock signal TX_PERIOD 309 equals the symbol period on the wireless network.

The stream packets 620, 621, 622, 623, 624, 625, 626, are generated by the packet assembler 305 from the application data and the control data received from the MAC layer 101.

The stream packets 620, 621, 622, 623, 624, 625, 626, are transmitted by the transmitting controller 301 upon occurrence of their respective clock events 619a, 619b, 619c, 619d, 619e, 619f and 619g. Each time a new packet is being transmitted, the packet assembler 305 transmits to the transmitting controller 301 a predetermined control character known by the high speed serial transceivers 203 and 204 as a 'start of packet' special character. Such a scheduling of the transmission on the intermediate connection 200c allows ensuring that when the PHY layer 102 requests application data in order to further encode data blocks to be transmitted on the transmission medium, application data are always available in the serial adapter 200b to satisfy its needs. The transmission latency is thus maintained from the beginning to the end of the MAC frame processing.

Transmitting the application data grouped according to the symbols Sj to be generated, one group of application data per transmission cycle (between two consecutive clock events 619a, 619b, 619c, 619d, 619e, 619f and 619g), further allows minimizing the buffering resources needed in the first and second adapters 200a and 200b to maintain low latency communications.

Each stream packet 620, 621, 622, 623, 624, 625, 626 comprises a header field 602, a header checksum field 603, a first payload field 604, a second payload field 605, a first payload CRC (Cyclic Redundancy Check) field 606 associated with the first payload field 604, a second payload CRC field 607 associated with the second payload field 605 and, if any padding is required to maintain a constant packet length, a padding field 608. For instance, the constant packet length equals 32 words.

The header checksum field 603 and the payload CRC fields 606 and 607 are used by the packet dis-assembler 503 to determine whether the transmission over the intermediate connection 200c occurred with no errors. If any such error is detected by the packet dis-assembler 503, the MAC frame under reception is corrupted. Either a retransmission may be performed or the whole MAC frame may be withdrawn. In this latter case, the MAC layer 101 may be informed via the signals MGT_DATAR, MGT_ADDR and MGT_R of the management data sub-connection 105.

The header field 602 comprises a first sub-field used for signalling information. The header field 602 further comprises two sub-fields 612 and 613 providing information about the payload fields 604 and 605. The second sub-field 612 comprises information about the size of the first payload field 604 and the third sub-field 613 comprises information about the size of the second payload field 605.

The first payload field 604 is used to transmit application data, as obtained from the packet assembler 305 from the data rate shaper 307 or the data buffer 407. The second payload field 605 is used to transmit messages (i.e. control data), as obtained from the packet assembler 305 from the message queue 303 or the message queue 403.

A stream packet 620, 621, 622, 623, 624, 625, 626 may not comprise any first payload field 604 or any second payload field 605, depending on whether it doesn't contain any application data nor any control data. In this case, the corresponding sub-field 612 or 613 of the header field 602 is set to 0 and the corresponding payload CRC field 606 or 607 is meaningless.

**Figure 9** represents a flow diagram of an algorithm performed by the serial link adapter 200a, in the context of the data transmissions shown in Figure 8.

In a step 900, the process starts with a MAC frame to be transmitted to the PHY layer 102. As shown in Figure 8, the MAC frame is composed of a plurality of data segments DSi.

In a step 901, the serial link adapter 200a obtains information about a respective channel coding scheme CSi and a respective code rate CRi to be applied by the PHY layer 102 for each data segment DSi. The coding scheme CSi and the code rate CRi to apply to each data segment DSi are provided by the MAC layer 101 via the management data sub-connection 105.

In a step 902, the serial link adapter 200a the serial link adapter 200a obtains the application data constituting the data segments DSi identified during the step 901. Indeed, the application data of a data segment DSi are generally obtained from the MAC layer 101 after the management data (coding scheme CSi and code rate Cri) applying to this data segment has been obtained from the MAC layer 101, in order to improve the transmission latency.

The serial adapter 200a determines for each data segment DSi, the amount of application data necessary for the PHY layer to encode a symbol Sj, on the basis of the obtained management data (coding scheme CSi and code rate CRi).

In the already-mentioned example of the IEEE 802.15.3c AV standard, considering 336 carriers for useful data transmission and a word size of 32 bits:

- for a 16-QAM coding scheme with a code rate of 2/3:

    336 (carriers) x 4 (16-QAM) x 2/3 (code rate) = 896 bits
    896 / 32=28words

- for a QPSK (Quadrature Phase-Shift Keying) coding scheme with a code rate of 2/3:

    336 (carriers) x 2 (QPSK) x 2/3 (code rate) = 448
    448 / 32 = 14 words

- for a QPSK coding scheme with a code rate of 1/3:

    336 (carriers) x 2 (QPSK) x 1/3 (code rate) = 224
    224 / 32=7words

In the case where an additional error correction code is used by the PHY layer 102, like a Reed-Solomon error correction code for instance, the involved overhead has to be added to the length of the data segment DSi considered.

Let's consider the example of a MAC frame composed of 2 data segments DSO and DS1. The first data segment DSO has to be encoded by the PHY layer 102 by using a QPSK coding scheme and a code rate 2/3. The length of the first data segment DSO is 140 words. The second data segment DS1 has to be encoded by the PHY layer 102 by using a 16-QAM coding scheme with a code rate of 2/3. The length of the second data segment DS1 is 2800 words. Then, the MAC frame is transmitted by the serial link adapter 200a as a sequence of 110 packets: 10 packets with the first payload field 604 containing 14 words followed by 100 packets with the first payload field 604 containing 28 words. The payload of these 110 packets is completed, in the second payload field 605, by messages, if any.

Therefore, for a transmission of a MAC frame from the MAC layer 101 to the PHY layer 102, the duration of the transmission via the intermediate connection 200c equals the duration of the transmission of said MAC frame on the wireless network by the PHY layer 102. During each transmission cycle of the intermediate connection 200c, the serial adapter 200a transmits the amount of application data needed by the PHY layer 102 to generate one corresponding symbol (or encoded data block).

In a step 904, it is checked whether the last transmission cycle for the concerned MAC frame is reached. If this is the last transmission cycle, the process ends in a step 905; else the process is reiterated from the step 902. If all management data applying to the MAC frame are not available before the execution of the step 902, the process may be reiterated from the step 901 instead.

The process described above, in relation to Figures 8 and 9, in the context of a MAC frame transmission on the wireless network similarly applies for a MAC frame reception from the wireless network, except that encoded data blocks are received by the PHY layer 102 and not generated by this considered PHY layer 102 (but by the PHY layer of a further device connected to the wireless network).

Any and all steps of the algorithm shown in Figures 6, 7 and 9 may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

In case of software implementation, a CPU (Central Processing Unit) is capable of executing instructions loaded into a RAM (Random Access Memory) loaded from a ROM (Read-Only Memory) or from an external memory. After the communication device has been powered on, the CPU is capable of reading from the RAM and executing the instructions. The instructions form one or more computer programs. The computer program(s) cause(s) the CPU to perform some or all of the steps of the algorithms described above in relation to Figures 6, 7 and 9.

Furthermore, some steps of the algorithms described above in relation to Figures 6, 7 and 9 may be performed in a different sequential order or in parallel.

## Claims

1. A communication system comprising a first device (101) having an interface adapted to be connected via a parallel connection (100) to a corresponding interface of a second device (102), the first and second devices being adapted to communicate via said parallel connection using a first predetermined communication protocol involving feedback, the system comprising:

- an intermediate connection (200c) having fewer lines than said parallel connection,

**characterized in that** the system further comprises:

- first and second adapters (200a, 200b) connected together via said intermediate connection and being adapted to communicate via said intermediate connection using a second predetermined communication protocol not involving feedback,

the first adapter being connected to said interface of said first device and the second adapter being connected to said interface of said second device and the adapters being co-operable so that, when the first and second devices communicate, the first adapter emulates said interface of said second device and the second adapter emulates said interface of said first device and so that the communication appears to each device as if the first predetermined communication protocol is being used between said devices.

2. The communication system according to claim 1, **characterized in that**, to transmit data items from the first device to the second device, the first adapter transmits a first request signal (DATA_TX_RQ) to the first device conforming to a second request signal that the second device transmits to the second adapter,
and **in that** the communications according to the second predetermined communication protocol are unidirectional.

3. The communication system according to any one of claims 1 and 2, **characterized in that** the communication protocol involving feedback uses handshaking and **in that** the communication protocol involving no feedback does not use any handshaking.

4. The communication system according to any one of claims 1 to 3, **characterized in that** the first and second devices are adapted to communicate via the parallel connection at frequencies of multi-gigabits per second.

5. The communication system according to any one of claims 1 to 4, **characterized in that**, the second device being adapted to communicate with at least one communication device via a transmission medium, the first adapter comprises:

- a transmitting unit (305) for transmitting, via the intermediate connection, application data items grouped according to data blocks (618a, 618b) encoded by the second device according to their respective channel coding scheme, said encoded data blocks being transmitted on said transmission medium.

6. The communication system according to claim 5, **characterized in that** the communications via the intermediate connection are scheduled by transmission cycles of respective duration that equals a duration of a transmission, by the second device, of one encoded data block on said transmission medium.

7. The communication system according to claim 6, **characterized in that** the transmitting unit is further adapted, for each such transmission cycle, to:

- transmit application data items corresponding to one data block to be encoded by the second device according to its respective channel coding scheme;
- transmit a quantity of control data items, if any, said quantity depending on the channel coding scheme to be used by the second device to generate said one data block to be encoded.

8. The communication system according to any one of claims 1 to 7, **characterized in that** the first device has a Medium Access Control layer function and the second device has a Physical layer function.

9. The communication system according to Claim 8, **characterized in that** the Medium Access Control layer and the Physical layer functions are adapted to wireless communications.

10. The communication system according to any one of claims 1 to 9, **characterized in that** the first adapter and the first device are implemented in a first integrated circuit device and wherein the second adapter and the second device are implemented in a second integrated circuit device.

11. An adapter (200a; 200b), for use in a communication system that comprises first (101) and second (102) devices and a further adapter (200b; 200a), the first device having an interface adapted to be connected via a parallel connection (100) to a corresponding interface of the second device (102), and the first device being adapted to communicate via said parallel connection with the second device using a first predetermined communication protocol involving feedback, the claimed adapter comprising:

- means for connecting the claimed adapter to said further adapter via an intermediate connection (200c) having fewer lines than said parallel connection,

**characterized in that** the claimed adapter further comprises:

- means for communicating with said further adapter via said intermediate connection using a second predetermined communication protocol not involving feedback,
- means for connecting the claimed adapter to said interface of one (101; 102) of said first and second devices and for co-operating with the further adapter, when the further adapter is connected to said interface of the other (102;101) of said first and second devices, so that, when the first and second devices communicate, the claimed adapter emulates said interface of said other device and so that, when the further adapter emulates said interface of said one device, the communication appears to each device as if the first predetermined communication protocol is being used between said devices.

12. The adapter according to claim 11, **characterized in that**, to transmit data items from said one device to said other device, the claimed adapter comprises:

- a transmitting unit (307) for transmitting a first request signal (DATA_TX_RQ) to said one device, the first request signal conforming to a second request signal that said other device transmits to the further adapter,

and **in that** the communications according to the second predetermined communication protocol are unidirectional.

13. The adapter according to any one of claims 11 and 12, **characterized in that** the communication protocol involving feedback uses handshaking and **in that** the communication protocol involving no feedback does not use any handshaking.

14. The adapter according to any one of claims 11 to 13, **characterized in that** the first and second devices are adapted to communicate via the parallel connection at frequencies of multi-gigabits per second.

15. The adapter according to any one of claims 11 to 14, **characterized in that** the first device has a Medium Access Control layer function and said second device has a Physical layer function.

16. An integrated circuit device **characterized in that** it comprises said one device and the claimed adapter according to any one of claims 11 to 15.

17. A method of communication between first (101) and second (102) devices, the first device having an interface adapted to be connected via a parallel connection (100) to a corresponding interface of the second device, and the first and second devices being adapted to communicate via said parallel connection using a first predetermined communication protocol involving feedback:

the method being **characterized in that**:

- first and second adapters (200a, 200b), which are connected together via an intermediate connection (200c) having fewer lines than said parallel connection, communicate via said intermediate connection using a second predetermined communication protocol not involving feedback, the first adapter being connected to said interface of said first device and the second adapter being connected to said interface of said second device, and

the adapters co-operate so that, when the first and second devices communicate, the first adapter emulates (702) said interface of said second device and the second adapter emulates (803) said interface of said first device and so that the communication appears to each device as if the first predetermined communication protocol is being used between said devices.

18. A method for communication between first (101) and second (102) devices, the first device having an interface adapted to be connected via a parallel connection (100) to a corresponding interface of the second device (102), and the first and second devices being adapted to communicate via said parallel connection using a first predetermined communication protocol involving feedback,

in which method one adapter (200a; 200b), which is connected to said interface of one of said first and second devices and is also connected to a further adapter (200b; 200a) via an intermediate connection (200c) having fewer lines than said parallel connection, performs the steps of:

- communicating with said further adapter via said intermediate connection using a second predetermined communication protocol not involving feedback, said further adapter being connected to said interface of the other of said first and second devices, and
- co-operating with said further adapter so that, when the first and second devices communicate, said one adapter emulates (702) said interface of said other device and so that, when said further adapter emulates (803) said interface of said one device, the communication appears to each device as if the first predetermined communication protocol is being used between said devices.

19. A computer program, **characterized in that** it comprises program code instructions for implementing the method of communication according to claim 17 or the method of communication according to claim 18, when said program is run on a computer.

20. Computer-readable storage means, **characterized in that** they store a computer program comprising a set of instructions that can be run by a computer to implement the method of communication according to claim 17 or the method of communication according to claim 18.

**Amended claims in accordance with Rule 137(2) EPC.**

**1.** A communication system comprising a first device (101) having an interface adapted to be connected via a parallel connection (100) to a corresponding interface of a second device (102), the first and second devices being adapted to communicate via said parallel connection using a first predetermined communication protocol involving feedback, the system comprising:

- an intermediate connection (200c) having fewer lines than said parallel connection,
- first and second adapters (200a, 200b) connected together via said intermediate connection and being adapted to communicate via said intermediate connection using a second predetermined communication protocol not involving feedback,

the first adapter being connected to said interface of said first device and the second adapter being connected to said interface of said second device and the adapters being co-operable so that, when the first and second devices communicate, the first adapter emulates said interface of said second device and the second adapter emulates said interface of said first device and so that the communication appears to each device as if the first predetermined communication protocol is being used between said devices, **characterized in that**, to transmit data items from the first device to the second device, the first adapter transmits a first request signal (DATA_TX_RQ) to the first device conforming to a second request signal that the second device transmits to the second adapter, and **in that** the communications according to the second predetermined communication protocol are unidirectional.

**2.** The communication system according to claim 1, **characterized in that** the communication protocol involving feedback uses handshaking and **in that** the communication protocol involving no feedback does not use any handshaking.

**3.** The communication system according to claim 1 or claim 2, **characterized in that** the first and second devices are adapted to communicate via the parallel connection at frequencies of multi-gigabits per second.

**4.** The communication system according to any one of claims 1 to 3, **characterized in that**, the second device being adapted to communicate with at least one communication device via a transmission medium, the first adapter comprises:

- a transmitting unit (305) for transmitting, via the intermediate connection, application data items grouped according to data blocks (618a, 618b) encoded by the second device according to their respective channel coding scheme, said encoded data blocks being transmitted on said transmission medium.

**5.** The communication system according to claim 4, **characterized in that** the communications via the intermediate connection are scheduled by transmission cycles of respective duration that equals a duration of a transmission, by the second device, of one encoded data block on said transmission medium.

**6.** The communication system according to claim 5, **characterized in that** the transmitting unit is further adapted, for each such transmission cycle, to:

- transmit application data items corresponding to one data block to be encoded by the second device according to its respective channel coding scheme;
- transmit a quantity of control data items, if any, said quantity depending on the channel coding scheme to be used by the second device to generate said one data block to be encoded.

**7.** The communication system according to any one of claims 1 to 6, **characterized in that** the first device has a Medium Access Control layer function and the second device has a Physical layer function.

**8.** The communication system according to Claim 7, **characterized in that** the Medium Access Control layer and the Physical layer functions are adapted to wireless communications.

**9.** The communication system according to any one of claims 1 to 8, **characterized in that** the first adapter and the first device are implemented in a first integrated circuit device and wherein the second adapter and the second device are implemented in a second integrated circuit device.

**10.** An adapter (200a; 200b), for use in a communication system that comprises first (101) and second (102) devices and a further adapter (200b; 200a), the first device having an interface adapted to be connected via a parallel connection (100) to a corresponding interface of the second device (102), and the first device being adapted to communicate via said parallel connection with the second device using a first predetermined communication protocol involving feedback, the claimed adapter comprising:

- means for connecting the claimed adapter to said further adapter via an intermediate connection (200c) having fewer lines than said parallel connection,
- means for communicating with said further adapter via said intermediate connection using a second predetermined communication protocol not involving feedback,
- means for connecting the claimed adapter to said interface of one (101; 102) of said first and second devices and for co-operating with the further adapter, when the further adapter is connected to said interface of the other (102:101) of said first and second devices, so that, when the first and second devices communicate, the claimed adapter emulates said interface of said other device and so that, when the further adapter emulates said interface of said one device, the communication appears to each device as if the first predetermined communication protocol is being used between said devices, **characterized in that**, to transmit data items from said one device to said other device, the claimed adapter comprises:
- a transmitting unit (307) for transmitting a first request signal (DATA_TX_RQ) to said one device, the first request signal conforming to a second request signal that said other device transm its to the further adapter,

and **in that** the communications according to the second predetermined communication protocol are unidirectional.

**11.** The adapter according to claim 10, **characterized in that** the communication protocol involving feedback uses handshaking and **in that** the communication protocol involving no feedback does not use any handshaking.

**12.** The adapter according to claim 10 or claim 11, **characterized in that** the first and second devices are adapted to communicate via the parallel connection at frequencies of multi-gigabits per second.

**13.** The adapter according to any one of claims 10 to 12, **characterized in that** the first device has a Medium Access Control layer function and said second device has a Physical layer function.

**14.** An integrated circuit device **characterized in that** it comprises said one device and the claimed adapter according to any one of claims 10 to 13.

**15.** A method of communication between first (101) and second (102) devices, the first device having an interface adapted to be connected via a parallel connection (100) to a corresponding interface of the second device, and the first and second devices being adapted to communicate via said parallel connection using a first predetermined communication protocol involving feedback:

and wherein:

- first and second adapters (200a, 200b), which are connected together via an intermediate connection (200c) having fewer lines than said parallel connection, communicate via said intermediate connection using a second predetermined communication protocol not involving feedback, the first adapter being connected to said interface of said first device and the second adapter being connected to said interface of said second device, and

the adapters co-operate so that, when the first and second devices communicate, the first adapter emulates (702) said interface of said second device and the second adapter emulates (803) said interface of said first device and so that the communication appears to each device as if the first predetermined communication protocol is being used between said devices,
the method being **characterized in that**:
in order to transmit data items from the first device to the second device,
the first adapter transmits a first request signal (DATA_TX_RQ) to the first device conforming to a second request signal that the second device transm its to the second adapter,
and **in that** the communications according to the second predetermined communication protocol are unidirectional.

**16.** A method for communication between first (101) and second (102) devices, the first device having an interface adapted to be connected via a parallel connection (100) to a corresponding interface of the second device (102), and the first and second devices being adapted to communicate via said parallel connection using a first predetermined communication protocol involving feedback,
in which method one adapter (200a; 200b), which is connected to said interface of one of said first and second devices and is also connected to a further adapter (200b; 200a) via an intermediate connection (200c) having fewer lines than said parallel connection, performs the steps of:

- communicating with said further adapter via said intermediate connection using a second predetermined communication protocol not involving feedback, said further adapter being connected to said interface of the other of said first and second devices, and
- co-operating with said further adapter so that, when the first and second devices communicate, said one adapter emulates (702) said interface of said other device and so that, when said further adapter emulates (803) said interface of said one device, the communication appears to each device as if the first predetermined communication protocol is being used between said devices,

**characterized in that** , in order to transmit data items from one device to said other device, said one adapter transmits a first request signal (DATA_TX_RQ) to said one device, the first request signal conforming to a second request signal that said other device transmits to the further adapter,
and **in that** the communications according to the second predetermined communication protocol are unidirectional.

**17.** A computer program, **characterized in that** it comprises program code instructions for implementing the method of communication according to claim 15 or the method of communication according to claim 16, when said program is run on a computer.

**18.** Computer-readable storage means, **characterized in that** they store a computer program comprising a set of instructions that can be run by a computer to implement the method of communication according to claim 15 or the method of communication according to claim 16.

**Prior Art**

PHY

102

MAC

101

100

103

104

105

TX_START

RX_START

DATA_CLK

DATA_RX

DATA_RX_EN

DATA_RX_RQ

DATA_TX

DATA_TX_EN

DATA_TX_RQ

MGT_W

MGT_ADDW

MGT_DATAW

MGT_R

MGT_ADDR

MGT_DATAR

**Figure 1**

Figure 2

**Figure 3**

**Figure 4**

EP 2 398 205 A1

**Figure 5**

EP 2 398 205 A1

| | |
|---|---|
| Initialization | 701 |

| | |
|---|---|
| Emulating the interface of the PHY layer to provide feedback to the  MAC layer according to a first predetermined communication protocol  involving feedback via the parallel connection | 702 |

| | |
|---|---|
| Receiving control and application data via the parallel connection from the MAC layer according to the first predetermined communication protocol | 703 |

| | |
|---|---|
| Transmitting the received control and application data to the intermediate connection, using a second predetermined protocol with no feedback | 704 |

# Figure 6

Initialization — 801

Receiving control and application data via the intermediate connection according to the second predetermined communication protocol not involving feedback — 802

Emulating the behavior of the MAC layer to provide, to the PHY layer via the parallel connection, the received application and control data, according to the first predetermined communication protocol involving feedback — 803

Receiving feedback from the PHY layer according to the first predetermined communication protocol involving feedback — 804

# Figure 7

Figure 8

EP 2 398 205 A1

Start — 900

Obtaining information about a channel coding scheme to be applied by the PHY layer from control data received from the MAC layer — 901

Obtaining the application data, received from the MAC layer, to which the channel coding scheme shall be applied — 902

During a transmission cycle of duration that equals to the duration of a transmission of an encoded data bloc by the PHY layer, transmitting the applicative data for said encoded data bloc and, if any, control data — 903

Last transmission cycle? — 904

no

yes

End — 905

# Figure 9

Europäisches
Patentamt

European
Patent Office

Office européen
des brevets

# EUROPEAN SEARCH REPORT

Application Number

EP 10 16 6723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 813 651 B1 (SMITH MICHAEL A [US] ET AL) 2 November 2004 (2004-11-02)<br><br>* abstract *<br>* figure 5 *<br>* column 2, line 15 - column 2, line 54 *<br>* column 5, line 30 - column 6, line 45 *<br>----- | 1,4, 8-11, 14-20 | INV.<br>H04L29/06 |
| A | EP 1 303 100 A2 (HEWLETT PACKARD CO [US]) 16 April 2003 (2003-04-16)<br>* the whole document *<br>----- | 1-20 | |

| | |
|---|---|
| | TECHNICAL FIELDS SEARCHED (IPC)<br><br>G06F<br>H04L |

The present search report has been drawn up for all claims

| Place of search | Date of completion of the search | Examiner |
|---|---|---|
| The Hague | 25 November 2010 | Pereira, Mafalda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 10 16 6723

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2010

| Patent document cited in search report | | Publication date | Patent family member(s) | | Publication date |
|---|---|---|---|---|---|
| US 6813651 | B1 | 02-11-2004 | NONE | | |
| EP 1303100 | A2 | 16-04-2003 | US 2003084195 | A1 | 01-05-2003 |

EPO FORM P0459

For more details about this annex : see Official Journal of the European Patent Office, No. 12/82